(19) Europäisches Patentamt
European Patent Office
Office européen des brevets

(11) **EP 2 515 423 A1**

(12) **EUROPEAN PATENT APPLICATION**

(43) Date of publication:
**24.10.2012 Bulletin 2012/43**

(51) Int Cl.:
**H02M 3/157** (2006.01)     **G05F 1/67** (2006.01)

(21) Application number: **11163038.0**

(22) Date of filing: **19.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Mitsubishi Electric R&D Centre Europe B.V.**
  **1119 NS  Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventor: **BUIATTI, Gustavo**
  **RENNES Cedex 7, 35708 (FR)**

(74) Representative: **Maillet, Alain**
  **Cabinet Le Guen Maillet**
  **5, place Newquay**
  **B.P. 70250**
  **35802 Dinard Cedex (FR)**

(54) **Apparatus for controlling the current going through an inductor of an energy conversion device**

(57)     The present invention concerns an apparatus for controlling the current going through an inductor of an energy conversion device, the energy conversion device comprising at least one switch and a capacitor connected between the terminals of a power source, the discharge of the capacitor providing current, at least a part of the provided current going through the inductor and the switch when the switch is conducting. The apparatus comprises means for reducing the voltage of the capacitor from a first voltage value to a second voltage value by controlling the conduction or not of the switch through the use of at least one predetermined mathematical function

Fig. 3

**Description**

The present invention relates generally to an apparatus for controlling the current going through an inductor of an energy conversion device.

A photovoltaic cell directly converts solar energy into electrical energy. The electrical energy produced by the photovoltaic cell can be extracted over time and used in the form of electric power. The direct electric power provided by the photovoltaic cell is provided to conversion devices like DC-DC up/down converter circuits and/or DC/AC inverter circuits.

However, the current-voltage droop characteristics of photovoltaic cells cause the output power to change nonlinearly with the current drawn from photovoltaic cells. The power-voltage curve changes according to climatic variations like light radiation levels and operation temperatures.

The near optimal point at which to operate photovoltaic cells or arrays of cells is at or near the region of the current-voltage curve where power is greatest. This point is denominated as the Maximum Power Point (MPP).

It is important to operate the photovoltaic cells around the MPP to optimize their power generation efficiency in grid-connected applications.

As the power-voltage curve changes according to climatic variations, the MPP also changes according to climatic variations.

It is then necessary to be able to identify the MPP at any time.

Prior and/or after the identification of the MPP, depending on the previous operation condition, the operation point of the power source needs to be hardly modified.

During such modification, depending on the MPP identification method, large current variation through the inductor of the conversion device may occur.

Large current levels due to the inductor saturation associated to strong control variations may deteriorate the inductor and also other power devices and components of the conversion device, reducing their lifetime or even leading to their destruction.

The same problem arises when, for maintenance reasons, it is necessary to discharge the capacitors of the energy conversion device for safety reasons. Large current variations may also occur.

The present invention aims at providing an apparatus which avoids that large current variations through the inductor of the conversion device may occur.

To that end, the present invention concerns an apparatus for controlling the current going through an inductor of an energy conversion device, the energy conversion device comprising at least one switch and a capacitor connected between the terminal of a power source, the discharge of the capacitor providing current, at least a part of the provided current going through the inductor and the switch when the switch is conducting, characterised in that the apparatus comprises means for reducing the voltage of the capacitor from a first voltage value to a second voltage value by controlling the conduction or not of the switch through the use of at least one predetermined mathematical function.

The present invention concerns also a method for controlling the current going through an inductor of an energy conversion device, the energy conversion device comprising at least one switch and a capacitor connected between the terminal of a power source, the discharge of the capacitor providing current, at least a part of the provided current going through the inductor and the switch when the switch is conducting, characterised in that the method comprises the step of reducing the voltage of the capacitor from a first voltage value to a second voltage value by controlling the conduction or not of the switch using at least one predetermined mathematical function.

Thus, it is possible to setup at design stage a given control reference signal that leads to a maximum current peak through the inductor, smaller than its saturation value, at any operation condition.

According to a particular feature, one mathematical function is used and the mathematical function is a linear mathematical function.

Thus, by using this same mathematical function for any operation condition it is possible to assure at least the same current peak levels through the inductor.

According to a particular feature, the means for reducing the voltage of the capacitor by controlling the conduction or not of the switch comprise means for monitoring the voltage on the capacitor and means for generating a voltage varying according to the mathematical function, means for subtracting the monitored voltage on the capacitor and the varying voltage according to the mathematical function in order to obtain an error and means for comparing a signal derived from the error to a periodical signal.

Thus, the proposed invention can be easily implemented in any energy conversion device that has its input connected to a power source, such as a photovoltaic generator, that is controlled in voltage control mode through classical pulse width modulation methods.

According to a particular feature, the signal derived from the error is obtained using a proportional integral derivative controller.

Thus, it is possible to better follow the reference signal if it is desired to vary the voltage value in a faster way than it is done with a proportional integral controller.

According to a particular feature, the duration of the period of time in which the voltage of the capacitor is reduced is determined from the first and second voltages values and by the slope of the mathematical function.

Thus, the slope of the reference signal can be the same at any condition, leading to same initial transient peaks, meaning longer times to higher initial voltage values and shorter times for lower initial voltage values for the same final voltage values.

According to a particular feature, the apparatus further comprises means for determining the maximum power point of the power source, the maximum power point of the power source being determined by charging the capacitor from the second voltage value to a third voltage value and by monitoring the voltage on the capacitor during the charge of the capacitor.

Thus, it is possible to identify the global MPP of a power source like a photovoltaic generator, avoiding to operate the energy conversion device at a local MPP such as it may happen when there is a partial shadow through the photovoltaic generator.

According to a particular feature, the apparatus comprises means for reducing the voltage of the capacitor from the third voltage value to a fourth voltage value by controlling the conduction or not of the switch using the at least one predetermined mathematical function.

Thus, after identifying the MPP it is possible to lead the operation point from a given operation point to the identified MPP, usually from a higher voltage value to a smaller one, always assuring that a given maximum value of current peak through the inductor will never be reached in transient conditions.

According to a particular feature, the duration of the period of time in which the voltage of the capacitor is reduced is determined from the third voltage value, the fourth voltage value and the slope of the mathematical function.

Thus, this time duration may be very small if the MPP is located not far from the third voltage value and the energy conversion device will be operating on its optimum point in a very fast way with few energy production loss linked to this last stage.

The characteristics of the invention will emerge more clearly from a reading of the following description of an example embodiment, the said description being produced with reference to the accompanying drawings, among which:

Fig. 1 is an example of an energy conversion system wherein the present invention may be implemented;
Fig. 2 is an example of a curve representing the output current variations of a power source according to the output voltage of the power source;
Fig. 3 represents an example of an energy conversion device according to the present invention;
Fig. 4 is an example of an algorithm for determining information enabling the determining of the MPP and for controlling the current in an inductor of the energy conversion device according to the present invention;
Fig. 5a is an example of the power source voltage variations obtained according to the present invention;
Fig. 5b is an example of reference voltage used for controlling the operation of the power source according to the present invention;
Fig. 5c is an example of the power source current variations obtained according to the present invention;
Fig. 5d is an example of the inductor current variations obtained according to the present invention;
Fig. 6 is an example of an algorithm for determining the voltage and current through the input capacitor according to the present invention;
Fig. 7 is an example of a power versus voltage curve that can be obtained according to the present invention.

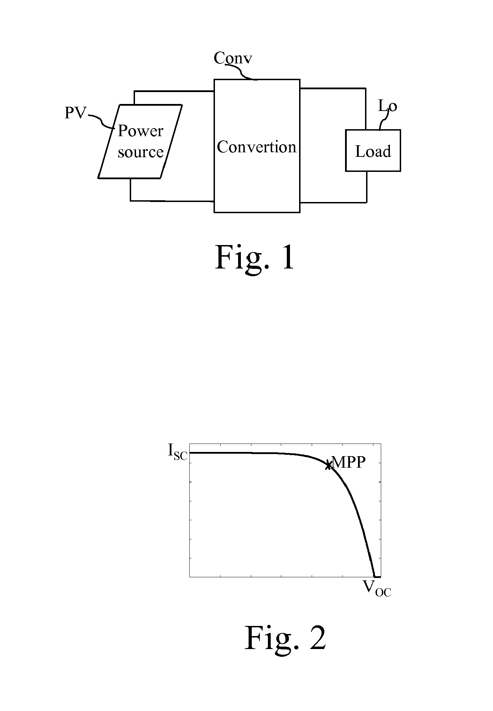

**Fig. 1** is an example of an energy conversion system wherein the present invention may be implemented.

The energy conversion system is composed of a power source PV like a photovoltaic cell or an array of cells or a fuel cell connected to an energy conversion device Conv like a DC-DC step-down/step-up converter and/or a DC/AC converter also named inverter, which output provides electrical energy to the load Lo.

The power source PV provides current intended to the load Lo. The current is converted by the conversion device Conv prior to be used by the load Lo.

The load may be for example a DC/AC converter which provides energy to an electric power network or the load may be a battery.

**Fig. 2** is an example of a curve representing the output current variations of a power source according to the output voltage of the power source.

On the horizontal axis of Fig. 2, voltage values are shown. The voltage values are comprised between null value and the open circuit voltage $V_{OC}$.

On the vertical axis of Fig. 2, current values are shown. The current values are comprised between null value and the short circuit current $I_{SC}$.

At any given light level and photovoltaic array temperature there is an infinite number of current-voltage pairs, or operating points, at which the photovoltaic array can operate. However, there exists a single MPP for a given light level and photovoltaic array temperature.

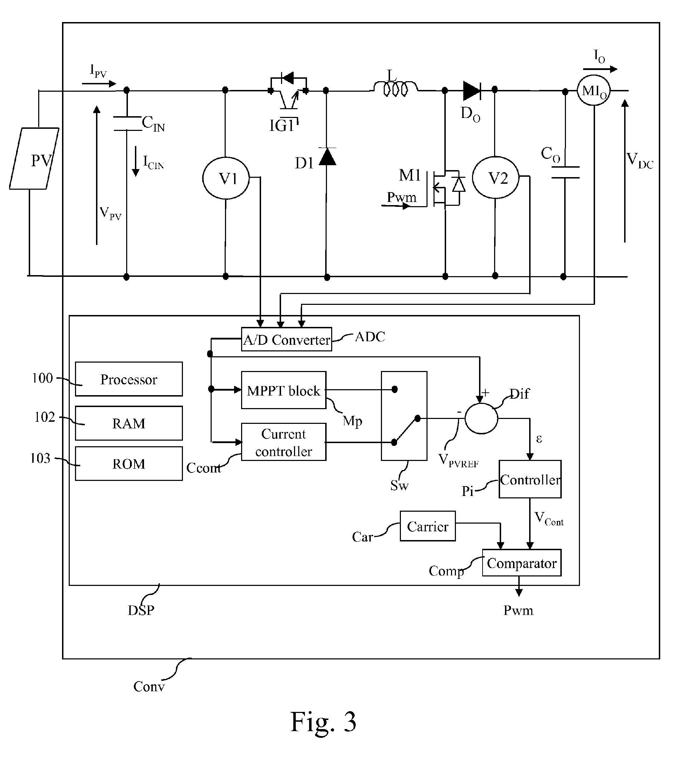

**Fig. 3** represents an example of an energy conversion device according to the present invention.

The positive terminal of the power source PV is connected to the first terminal of a capacitor $C_{IN}$ and the negative terminal of the power source PV is connected to a second terminal of the capacitor $C_{IN}$.

The voltage on the capacitor $C_{IN}$ is monitored by voltage measurement means V1. The voltage on the capacitor $C_{IN}$ is equal to the voltage $V_{PV}$ provided by the power source PV.

The first terminal of the capacitor $C_{IN}$ is connected to a switch IG1.

For example, the switch IG1 is an IGBT (Insulated Gate Bipolar Transistor) and the first terminal of the capacitor $C_{IN}$ is connected to the collector of the switch IG1.

The switch IG1 is always in ON state, i.e. in conduction mode, when the energy conversion device Conv converter is operating in Boost mode i.e. in step-up configuration.

It has to be noted here that the switch IG1 is in OFF state, i.e. in non conduction mode during the phase PH3, which will be disclosed hereinafter.

The emitter of the switch IG1 is connected to the cathode of a diode D1. The anode of the diode D1 is connected to the negative terminal of the power source PV.

The emitter of the switch IG1 is also connected to a first terminal of the inductor L.

The second terminal of the inductor L is connected to a switch M1.

The switch M1 is for example a NMOSFET (N channel Metal Oxide Semiconductor Field Effect Transistor).

The second terminal of the inductor L is connected to the drain of the NMOSFET M1. The source of the NMOSFET is connected to the negative terminal of the power source PV.

The gate of the NMOSFET is driven by a gate driver circuit, not shown in Fig. 3, controlled by a DSP (Digital Signal Processor) using a signal Pwm which will be disclosed hereinafter.

The DSP controls the switch NMOSFET M1 in the case when operation is in Boost mode (step-up converter) in order to modify the voltage and current provided by the power source for a fixed output voltage value $V_{DC}$.

The second terminal of the inductor L is connected to the anode of a diode Do.

The cathode of the diode Do is connected to a first terminal of a capacitor $C_O$. The second terminal of the capacitor $C_O$ is connected to the negative terminal of the power source PV.

The cathode of the diode Do is connected to a first terminal of voltage measurement means V2 which measures the voltage between the second terminal of the inductor L and the negative terminal of the power source PV. The cathode of the diode Do is also connected to a first terminal of current measurement means $MI_o$ which measures the current injected to the load that may be a battery or an inverter.

It has to be noted here that, when the load is a DC/AC converter connected to an electric power network, the current measurement mean $MI_O$ is connected between one output of the DC/AC converter and the electric power network, usually in series with a filter inductor. The current measurement mean $MI_o$ is needed for controlling the injected current into the electric power network and for assuring the Power Factor Correction (PFC), instead of being connected as disclosed above. Thus, the measured AC voltage and AC current are provided to an analogue to digital converter ADC and a low pass filter with very low cut-off frequency is used for obtaining the average power actually injected into the grid.

The output voltage of the converter Conv is named $V_{DC}$.

The voltage $V_{PV}$ and $V_{DC}$ measured by measurement means V 1 and V2 and the current $I_o$ measured by measurement means $MI_o$ are converted into digital data by an analogue to digital converter ADC included in the DSP (Digital Signal Processor).

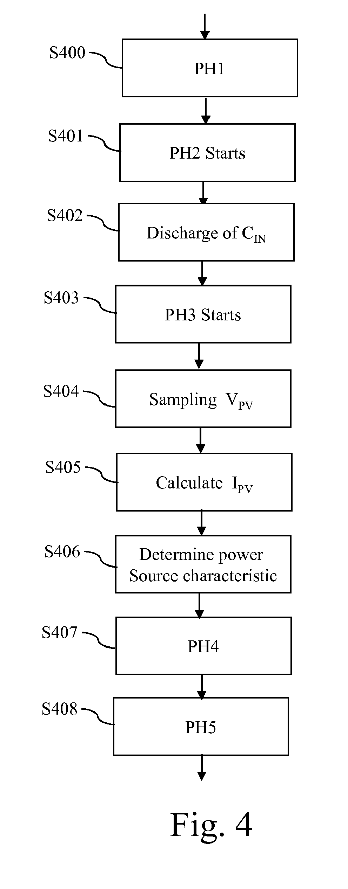

The DSP has an architecture based on components connected together by a bus not shown in Fig. 1 and a processor 100 controlled by the programs related to the algorithms as disclosed in the Figs. 4, 7 and 9.

The bus links the processor 100 to a read only memory ROM 103, a random access memory RAM 102 and an analogue to digital converter ADC.

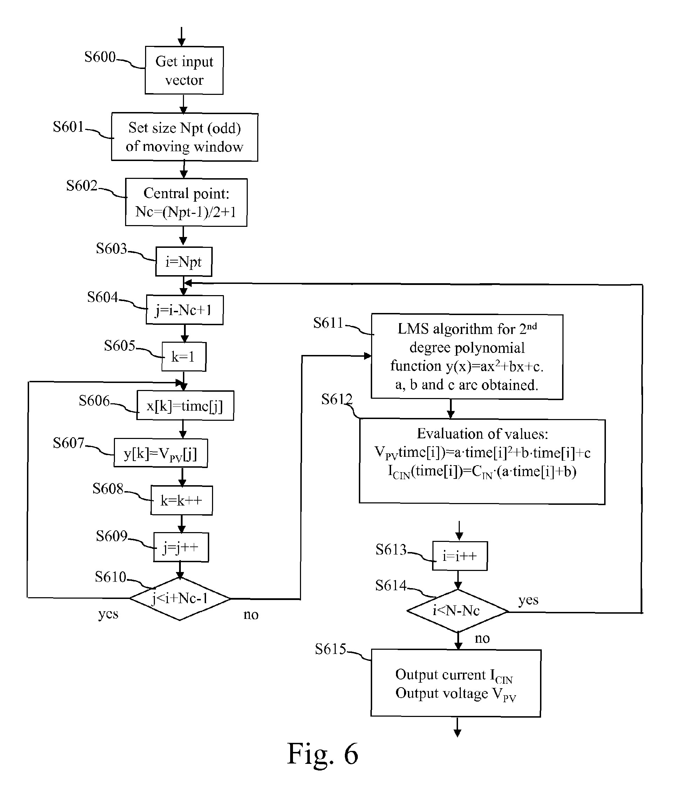

The read only memory ROM 103 contains instructions of the programs related to the algorithms as disclosed in the Figs. 4 and 6 which are transferred, when the energy conversion device Conv is powered on to the random access memory RAM 102.

The RAM memory 102 contains registers intended to receive variables, and the instructions of the programs related to the algorithms as disclosed in the Figs. 4 and 6.

The DSP comprises an MPPT (Maximum Power Point Tracker) control block Mp, a current controller block Ccont, a switch Sw, subtracting means Dif, a controller Pi, a carrier generation module Car and a comparator Comp.

It has to be noted here that the MPPT control block Mp, the current controller block Ccont, the switch Sw, the subtracting means Dif, the controller Pi, the carrier generation module Car and the comparator Comp may be implemented under the form of software.

The output of the analogue to digital converter ADC is provided to the MPPT control block Mp, to the current controller block Ccont and to the subtracting means Dif.

The MPPT control block MP receives the digital converted voltages $V_{PV}$ and $V_{DC}$ together with the measured

current $I_o$.

The current controller block Ccont receives the digitally converted voltage $V_{PV}$.

The switch Sw enables the selection of the operation mode of the converter Conv in MPPT tracking phase or in current control phase which will be disclosed in reference to the Fig. 4.

The voltage at the output of the switch Sw is denoted $V_{PVREF}$ and is subtracted to the digitally converted voltage $V_{DC}$ by the subtracting means Dif. The output error $\varepsilon$ of the subtracting means Dif is controlled by the controller Pi and provided to the comparator Comp which compares it to a carrier signal provided by the carrier generation module Car. The controller Pi is for example a Proportional-Integral-Derivative (PID) controller.

The output of the comparator Comp provides the control signal Pwm.

**Fig. 4** is an example of an algorithm for determining information enabling the determining of a MPP according to the present invention.

More precisely, the present algorithm is executed by the processor 100.

The algorithm for obtaining information enabling the determination of the maximum power point of the power source monitors at least the voltage $V_{PV}$ on the capacitor $C_{IN}$, the voltage $V_{DC}$ and the current $I_o$.

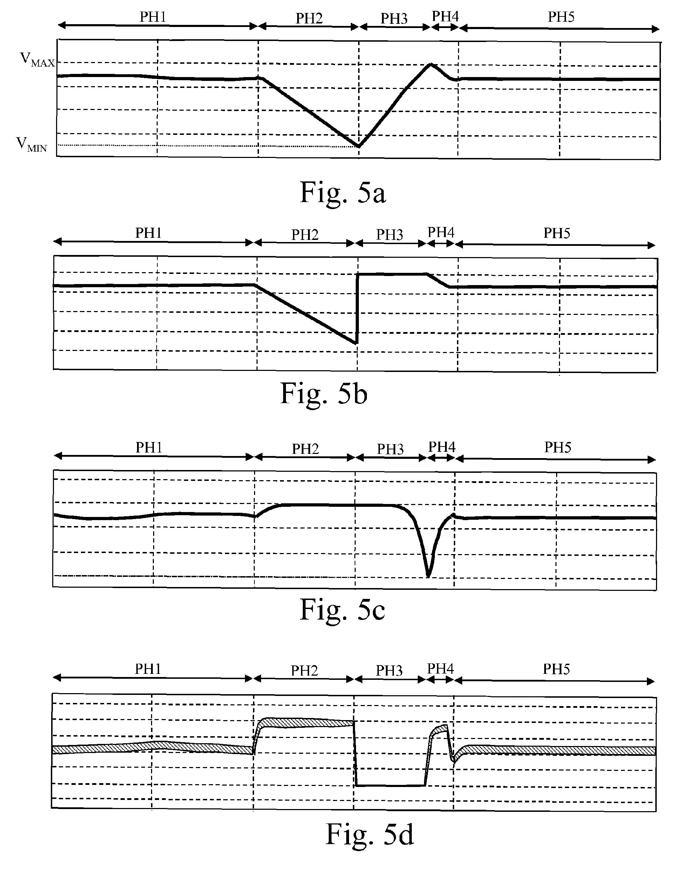

At step S400, the phase PH1 starts. The phase PH1 is shown in the Figs. 5a to 5d.

**Fig. 5a** is an example of the power source voltage variations obtained according to the present invention.

The time is represented on horizontal axis of the Fig. 5a and the voltage is represented on the vertical axis of the Fig. 5a.

**Fig. 5b** is an example of reference voltage used for controlling the operation of the power source according to the present invention.

The time is represented on horizontal axis of the Fig. 5b and the voltage is represented on the vertical axis of the Fig. 5b.

**Fig. 5c** is an example of the power source current variations obtained according to the present invention.

The time is represented on horizontal axis of the Fig. 5c and the current is represented on the vertical axis of the Fig. 5c.

**Fig. 5d** is an example of the inductor current variations obtained according to the present invention.

The time is represented on horizontal axis of the Fig. 5d and the current is represented on the vertical axis of the Fig. 5d.

The hashed area represents the envelope of the inductor current variations.

During the phase PH1, the energy conversion device Conv acts, for example, as a boost (step-up) DC/DC converter. It has to be noted here that the energy conversion device may act as a buck (step-down) DC/DC converter as well.

During the phase PH1, the energy conversion device Conv controls the operation point of the power source and operates in Perturb and Observe (P&O) maximum power point tracking (MPPT) mode, for example.

In the P&O MPPT phase the available power is estimated by using the information concerning the output power of energy conversion device ($V_{DC} \cdot I_o$) after a low-pass filtering.

During the phase PH1 the switch Sw enables the reference voltage provided by the MPPT control block to be compared to the voltage $V_{PV}$ provided by the power source PV measured by the measurement means V1 and which is digitally converted.

The error $\varepsilon$ generated by the difference between $V_{PV\ REF}$ and $V_{PV}$ is compensated by the controller Pi which may be a proportional integral derivative (PID) controller or a proportional integral controller (PI), resulting in a $V_{Cont}$ signal.

$V_{Cont}$ signal is then compared to a carrier waveform $V_{carrier}$ which may be a triangular waveform, or even a saw tooth waveform, with maximum value $V_M$ and frequency fsw.

If $V_{carrier} < V_{Cont}$, the switch M1 is conducting or ON, otherwise the switch M1 is not conducting or OFF.

During the phase PH1, the input voltage is regulated around the desired value $V_{PV\ REF}$ while the output voltage $V_{DC}$ is constant. For example, the output voltage $V_{DC}$ may be imposed by a battery or the output voltage $V_{DC}$ may be a regulated DC link of an inverter that regulates the output voltage $V_{DC}$ through a specific control loop depending on the sort of application, like a grid-connected application or not.

During the phase PH1, $V_{PV}$ follows the reference value $V_{PVREF}$ supplied by the MPPT algorithm, $I_{PV}$ varies accordingly, and $I_L$ varies according to the switching of the switch M1.

At next step S401, the phase PH2 starts.

During the phase PH2, the capacitor $C_{IN}$ is discharged, for example in order to allow to characterise the power curve of the power source PV.

The capacitor $C_{IN}$ is discharged from the present voltage value $V_{MPP}$ to a minimal voltage value $V_{MIN}$ which is for example the minimum accepted operation voltage value of the energy conversion device Conv.

According to the invention, the time duration of the phase PH2 is defined so as to limit the current going through the inductor L which is imposed by a given slope of $V_{PVREF}$.

During the phase PH2, i.e. at step S402, the switch Sw enables the voltage provided by the current controller Ccont to be compared to the voltage $V_{PV}$ provided by the power source that is measured by the measurement means V1 and digitally converted. The current controller Ccont provides a voltage $V_{PVREF}$ which is defined according to a given mathematical function decreasing from an initial value $V_{PV}$, which corresponds here to the $V_{MPP}$ value of that PH1 to $V_{MIN}$.

The voltage $V_{PVREF}$ follows the mathematical function that assures that current peak on the inductor L will not be greater than a maximum value, for example its saturation value.

The duration of the phase PH2 is then dependent of $V_{MPP}$ and the minimal voltage value $V_{MIN}$ associated to the slope that will be the same at any operation voltage value of the power source PV.

For example, the mathematical function is a linear function like a first-degree polynomial function of one variable.

It has to be noted here that plural different linear functions can be used consecutively during the discharge of the capacitor $C_{IN}$.

When the capacitor voltage $V_{PV}$ reaches the minimum voltage value $V_{MIN}$, the phase PH2 ends.

At step S403, the phase PH3 starts.

The phase PH3 corresponds to a time period during which the power curve is monitored.

The DSP sets the switches IG1 and M1 in the non conducting state.

Thus, the input capacitor $C_{IN}$ is freely charged by the power source PV source from $V_{MIN}$ until a maximum value $V_{MAX}$, which is for example $V_{MAX} = 0.85 V_{OC}$.

During the phase PH3, the voltage $V_{PV}$ is sampled during the charge of the capacitor $C_{IN}$.

The voltage samples of $V_{PV}$ are stored during the phase PH3 at step S404.

At next step S405, the voltage samples of $V_{PV}$ are used to evaluate the capacitor current $I_{CIN}$ which is the same current $I_{PV}$ outputted by the power source PV.

The determination of $I_{CIN}$ will be disclosed in more detail in reference to Fig. 6. At next step S406, the power source characteristic is determined.

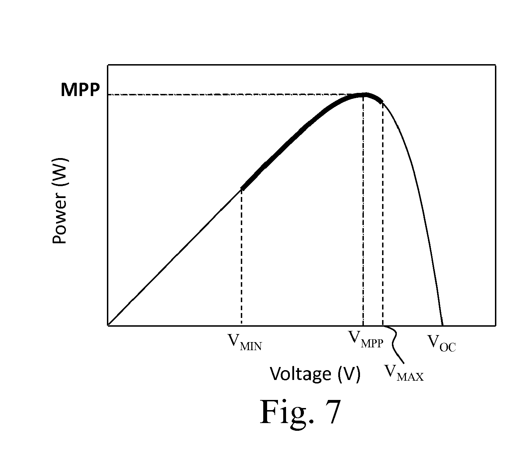

**Fig. 7** is an example of a power versus voltage curve that can be obtained according to the present invention.

The voltage $V_{PV}$ is represented on the horizontal axis of the Fig. 7 and the power outputted by the power source PV is represented on the vertical axis of the Fig. 7.

Bold part of the curve represents the part of the curve obtained from $I_{PV}$ and $V_{PV}$ determined by the present invention.

The MPP corresponds to the maximum power that can be outputted by the power source PV.

The new MPP information is provided to the MPPT block Mp.

At next step S407, the phase PH4 starts.

At shown in Fig. 5a, at the beginning of the phase PH4, the voltage $V_{PV}$ is equal to $V_{MAX}$ and $V_{PV}$ must be taken to the MPP operation voltage determined at step S406.

According to the invention, the time duration of the phase PH4 is defined so as to limit the current going through the inductor L.

During the phase PH4, the switch Sw enables the voltage provided by the current controller Ccont to be compared to the voltage $V_{PV}$ provided by the power source measured by the measurement means V1 and digitally converted. The current controller Ccont provides a voltage $V_{PVREF}$ which is defined according to a given mathematical function decreasing from an initial value $V_{MAX}$ to $V_{MPP}$ value.

The slope of this mathematical function is for example the same slope of the mathematical function used in phase PH2.

The voltage $V_{PVREF}$ follows the mathematical function that assures that current peak on the inductor L will not be greater than a maximum value, for example its saturation value.

The duration of the phase PH4 is then dependent of $V_{MPP}$, the maximum voltage value $V_{MAX}$ and to the slope that is the same one at any operation voltage value of the power source PV.

For example, the mathematical function is a linear function like a first-degree polynomial function of one variable.

As observed in the Fig. 5d, the current $I_L$ is limited and there is no saturation of the inductor L.

At next step S408, the phase PH5 starts.

Using the newly determined MPP value, the energy conversion device Conv controls the operation of the power source PV and operates in P&O maximum power point tracking MPPT mode as disclosed at phase PH1.

In the P&O MPPT phase the available power is estimated by using the information concerning the output power of energy conversion device ($V_{DC} \cdot I_o$) after a low-pass filtering.

**Fig. 6** is an example of an algorithm for determining the voltage and current through the input capacitor according to the present invention.

More precisely, the present algorithm is executed by the processor 100.

From a general point of view, with the present algorithm, the capacitor current $I_{CIN}$ for the given sample is determined by multiplying the capacitance value of the capacitor $C_{IN}$ by the voltage derivative of the given sample, the voltage derivative being obtained through a fitted mathematical function, for example a polynomial function with real coefficients.

The fitted mathematical function is obtained by minimizing the sum of the squares of the difference between the measured voltage $y_i$ with i=1 to N at consecutive time samples $x_i$ and mathematical functions $f(x_i)$ in order to obtain a processed voltage for the given time sample. It is done as follows.

Given N samples $(x_1,y_1),(x_2,y_2)...(x_N,y_N)$, the required fitted mathematical function can be written, for example, in the form:

$$f(x)=C_1 \cdot f_1(x)+C_2 \cdot f_2(x)+...+C_K \cdot f_K(x)$$

where $f_j(x)$, j=1,2...K are mathematical functions of x and the $C_j$, j=1,2...K are constants which are initially unknown.

The sum of the squares of the difference between f(x) and the actual values of y is given by

$$E = \sum_{i=1}^{N}\left[f(x_i) - y_i\right]^2 = \sum_{i=1}^{N}\left[C_1 f_1(x_i) + C_2 f_2(x_i) + ... + C_K f_K(x_i) - y_i\right]^2$$

This error term is minimized by taking the partial first derivative of E with respect to each of constants, $C_j$, j=1,2,...K and putting the result to zero. Thus, a symmetric system of K linear equation is obtained and solved for $C_1$, $C_2$, ... , $C_K$. This procedure is also known as Least Mean Squares (LMS) algorithm.

With the voltage samples of V1, a curve is obtained based on the fitting of suitable mathematical functions, for example polynomial functions with real coefficients, in pre-defined windows which will move for each sample. Thus, the voltage is filtered and its derivative can be simultaneously calculated for every central point in the window in a very simple and direct way, resulting in the determination of current without the need of any additional current sensor.

At step S600, the processor 100 gets the N samples of V1 obtained during phase PH2. For example, at least one hundred samples are obtained. Each sample is a bidimensional vector, the coefficients of which are the voltage value and time to which voltage has been measured.

At next step S601, the processor 100 determines the size of a moving window. The size of the moving window indicates the number Npt of samples to be used for determining a curve based on the fitting of suitable mathematical functions, for example polynomial functions with real coefficients. The size of the moving window is odd. For example, the size of the moving window is equal to twenty one.

At next step S602, the processor 100 determines the central point Nc of the moving window.

At next step S603, the processor 100 sets the variable i to the value Npt.

At next step S604, the processor 100 sets the variable j to i-Nc+1.

At next step S605, the processor 100 sets the variable k to one.

At next step S606, the processor 100 sets the value of x(k) to the time coefficient of sample j.

At next step S607, the processor 100 sets the value of y(k) to the voltage coefficient of sample j.

At next step S608, the processor 100 increments the variable k by one.

At next step S609, the processor 100 increments the variable j by one.

At next step S610, the processor 100 checks if the variable j is strictly lower than the sum of i and Nc minored by one.

If the variable j is strictly lower than the sum of i and Nc minored by one, the processor 100 returns to step S606. Otherwise, the processor 900 moves to step S611.

At step S611, the processor 100 determines the fitted mathematical function, for example the polynomial function $y(x)=ax^2+bx+c$, using the Least Mean Square algorithm and all the x(k) and y(k) values sampled at steps S606 and S607 until the condition on S610 is reached.

The processor 100 obtains then the a, b and c real coefficients of the second degree polynomial function ($[a, b,c] \in \Re^3$).

At next step S612, the processor 100 evaluates the filtered voltage value and the needed currents according to the following formulas:

$$V_{PV}(time[i])=a \cdot time[i]^2+b \cdot time[i]+c$$
$$I_{CIN}(time[i])=C_{IN} \cdot (a \cdot time[i]+b)$$

At next step S613, the processor 900 increments the variable i by one unit.

At next step S614, the processor 100 checks if i is strictly lower than N minored by Nc.

If i is strictly lower than N minored by Nc, the processor 100 returns to step S604. Otherwise, the processor 300 moves to step S615 and outputs voltage and current pairs determined by the present algorithm.

After that, the processor 100 interrupts the present algorithm and returns to step S406 of the algorithm of Fig. 4.

Naturally, many modifications can be made to the embodiments of the invention described above without departing from the scope of the present invention.

**Claims**

1. Apparatus for controlling the current going through an inductor of an energy conversion device, the energy conversion device comprising at least one switch an a capacitor connected between the terminal of a power source, the discharge of the capacitor providing current, at least a part of the provided current going through the inductor and the switch when the switch is conducting, **characterised in that** the apparatus comprises means for reducing the voltage of the capacitor from a first voltage value to a second voltage value by controlling the conduction or not of the switch through the use of at least one predetermined mathematical function.

2. Apparatus according to claim 1, **characterised in that** one mathematical function is used and the mathematical function is a linear mathematical function.

3. Apparatus according to claim 1 or 2, **characterised in that** the means for reducing the voltage of the capacitor by controlling the conduction or not of the switch comprise means for monitoring the voltage on the capacitor and means for generating a voltage varying according to the mathematical function, means for subtracting the monitored voltage on the capacitor and the voltage varying according to the mathematical function in order to obtain an error and means for comparing a signal derived from the error to a periodical signal.

4. Apparatus according to claim 3, **characterised in that** the signal derived from the error is obtained using a proportional integral derivative controller.

5. Apparatus according to any of the claims 1 to 4, **characterised in that** the duration of the period of time in which the voltage of the capacitor is reduced is determined from the first and second voltages values and by the slope of the mathematical function.

6. Apparatus according to any of the claims 1 to 5, **characterised in that** the apparatus further comprising means for determining the maximum power point of the power source, the maximum power point of the power source being determined by charging the capacitor from the second voltage value to a third voltage value and by monitoring the voltage on the capacitor during the charge of the capacitor.

7. Apparatus according to claim 6, **characterised in that** the apparatus comprises means for reducing the voltage of the capacitor from the third voltage value to a fourth voltage value by controlling the conduction or not of the switch using the at least one predetermined mathematical function.

8. Apparatus according to claim 7, **characterised in that** the duration of the period of time in which the voltage of the capacitor is reduced is determined from the from the third voltage value and the fourth voltage value.

9. Method for controlling the current going through an inductor of an energy conversion device, the energy conversion device comprising at least one switch and a capacitor connected between the terminal of a power source, the discharge of the capacitor providing current, at least a part of the provided current going through the inductor and the switch when the switch is conducting, **characterised in that** the method comprises the step of reducing the voltage of the capacitor from a first voltage value to a second voltage value by controlling the conduction or not of the switch through the use of at least one predetermined mathematical function.

Conv

PV

Power
source

Convertion

Lo

Load

# Fig. 1

$I_{SC}$

*MPP

$V_{OC}$

# Fig. 2

Fig. 3

S400 — PH1

S401 — PH2 Starts

S402 — Discharge of $C_{IN}$

S403 — PH3 Starts

S404 — Sampling $V_{PV}$

S405 — Calculate $I_{PV}$

S406 — Determine power Source characteristic

S407 — PH4

S408 — PH5

# Fig. 4

Fig. 5a

Fig. 5b

Fig. 5c

Fig. 5d

S600 — Get input vector

S601 — Set size Npt (odd) of moving window

S602 — Central point: Nc=(Npt-1)/2+1

S603 — i=Npt

S604 — j=i-Nc+1

S605 — k=1

S606 — x[k]=time[j]

S607 — y[k]=$V_{PV}$[j]

S608 — k=k++

S609 — j=j++

S610 — j<i+Nc-1

yes    no

S611 — LMS algorithm for 2nd degree polynomial function y(x)=ax²+bx+c. a, b and c are obtained.

S612 — Evaluation of values: $V_{PV}$time[i])=a·time[i]²+b·time[i]+c $I_{CIN}$(time[i])=$C_{IN}$·(a·time[i]+b)

S613 — i=i++

S614 — i<N-Nc    yes

no

S615 — Output current $I_{CIN}$ Output voltage $V_{PV}$

Fig. 6

Fig. 7

# EP 2 515 423 A1

**EUROPEAN SEARCH REPORT**

Application Number

EP 11 16 3038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/236612 A1 (KHAJEHODDIN SAYED ALI [CA] ET AL) 23 September 2010 (2010-09-23) * paragraphs [0011], [0051], [0061], [0065], [0083]; figure 3A * ----- | 1-9 | INV. H02M3/157 G05F1/67 |
| A | US 6 111 767 A (HANDLEMAN CLAYTON KLING PHILIP [US]) 29 August 2000 (2000-08-29) * column 11, line 37 - line 60 * ----- | 1-9 | |
| A | EP 2 273 659 A1 (MITSUBISHI ELEC R&D CT EUROPE [NL]; MITSUBISHI ELECTRIC CORP [JP]) 12 January 2011 (2011-01-12) * paragraph [0122] - paragraph [0152]; figures 7A, 7B * ----- | 1-9 | |

TECHNICAL FIELDS
SEARCHED      (IPC)

H02M
G05F

The present search report has been drawn up for all claims

| Place of search | Date of completion of the search | Examiner |
|---|---|---|
| Munich | 1 September 2011 | Kruip, Stephan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

15

## ANNEX TO THE EUROPEAN SEARCH REPORT
## ON EUROPEAN PATENT APPLICATION NO.

EP 11 16 3038

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2011

| Patent document cited in search report | | Publication date | Patent family member(s) | | Publication date |
|---|---|---|---|---|---|
| US 2010236612 | A1 | 23-09-2010 | CA | 2655007 A1 | 20-08-2010 |
| | | | CA | 2693737 A1 | 20-08-2010 |
| US 6111767 | A | 29-08-2000 | US | 6339538 B1 | 15-01-2002 |
| EP 2273659 | A1 | 12-01-2011 | NONE | | |

EPO FORM P0459

For more details about this annex : see Official Journal of the European Patent Office, No. 12/82